Europäisches Patentamt

European Patent Office

Office européen des brevets

(19)

(11)  EP 1 195 635 A1

(12)  EUROPEAN PATENT APPLICATION
published in accordance with Art. 158(3) EPC

(43) Date of publication:
    10.04.2002  Bulletin 2002/15

(51) Int Cl.⁷: $G02B\ 17/08$

(21) Application number: 00917386.5

(86) International application number:
    PCT/JP00/02588

(22) Date of filing: 20.04.2000

(87) International publication number:
    WO 01/81971 (01.11.2001 Gazette 2001/44)

(84) Designated Contracting States:
    AT BE CH CY DE DK ES FI FR GB GR IE IT LI LU
    MC NL PT SE

(71) Applicant: MITSUBISHI DENKI KABUSHIKI
    KAISHA
    Tokyo 100-8310 (JP)

(72) Inventors:
    • NAKANO, Takayuki
      Chiyoda-ku, Tokyo 100-8310 (JP)
    • TAMAGAWA, Yasuhisa
      Chiyoda-ku, Tokyo 100-8310 (JP)

(74) Representative: Pfenning, Meinig & Partner
    Mozartstrasse 17
    80336 München (DE)

(54)  **IMAGE OPTICAL SYSTEM**

(57)  An imaging optical system includes a reflecting mirror for imaging incident rays of light from an object, an aperture diaphragm disposed at the center of curvature of the reflecting mirror, and an aberration correcting plate disposed near the aperture diaphragm, having one side of an aspherical shape, and for eliminating spherical aberration produced in the reflecting mirror, in which when a coordinate in a direction of an optical axis is z, a coordinate in a direction vertical to the optical axis is y, a radius of the aperture diaphragm is h, and a constant determined by a correction amount for eliminating the spherical aberration is A, and when the aspherical shape of the aberration correcting plate is approximated by a quartic function, $z = A(y*y*y*y - k*h*h*y*y)$, a parameter k is almost 1.

FIG. I

**Description**

Technical Field

The present invention relates to an imaging optical system used for a camera and for forming an image of an object.

Background Art

A function required for an imaging optical system is to form an image of an object to be photographed on a detector. If aberration of the optical system is large, an image of an object obtained by a camera is blurred, and picture quality is remarkably deteriorated. As the aberration, five aberrations of "spherical aberration", "coma aberration", "astigmatism", "curvature of field", and "distortion" can be enumerated, and in the imaging optical system, it is necessary to reduce at least the four aberrations except "distortion".

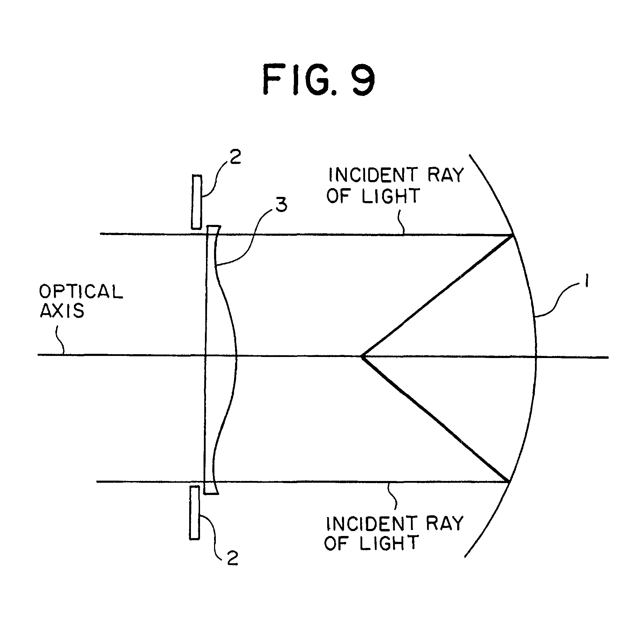

FIG. 9 is a view showing a section of a conventional Schmidt optical system described in, for example, "Reflecting Telescope" by Yasumasa Yamashita, Tokyo Shuppan (1992).

In FIG. 9, reference numeral 1 designates a spherical reflecting mirror which images incident rays of light from an object. Reference numeral 2 designates an aperture diaphragm which is disposed at the center of curvature of the reflecting mirror 1. Reference numeral 3 designates a circular aberration correcting plate which is made of germanium, eliminates the spherical aberration produced in the reflecting mirror 1, has one side formed into an aspherical shape, and is disposed near the aperture diaphragm 2.

As the aberrations which need to be eliminated in the imaging optical system, as described above, the four aberrations of "spherical aberration", "coma aberration", "astigmatism", and "curvature of field" can be mainly enumerated. The "spherical aberration" is aberration produced by constructing a reflecting surface by only a spherical shape and can be eliminated by using an aspherical shape. With respect to the "coma aberration", since an oblique incident main ray does not vertically enter a sphere, a tangential section of a reflecting surface becomes asymmetric, and as a result, the aberration is produced. Also with respect to the "astigmatism", similarly to the coma aberration, since an oblique incident main ray does not vertically enter a sphere, the curvature of a tangential section of a reflecting surface is different from the curvature of a sagittal section, and as a result, the aberration is produced. The "curvature of field" is produced when the Petzval sum indicating the curvature of an image surface does not become 0.

In the Schmidt optical system shown in FIG. 9, the diaphragm is placed at the center of curvature of the reflecting mirror 1, so that even if the main ray passing through the center of the diaphragm enters obliquely, it always enters the mirror surface vertically, and the coma aberration and the astigmatism caused by the oblique incidence are eliminated. The spherical aberration is eliminated by using the aberration correcting plate 3 disposed near the diaphragm. With respect to the remaining curvature of field, it is necessary to bend an image pickup element along an image surface or to use an image flattening lens. Of course, when a picture angle is small, the influence of the curvature of field is also low and there does not occur a problem.

In the foregoing conventional Schmidt optical system, the surface shape required for the aberration correcting plate 3 is a quartic or higher aspherical shape to eliminate the spherical aberration. Alternatively, such a shape is used, in which when a quadric term is added to minimize chromatic aberration produced by the aberration correcting plate 3 and the surface shape is approximated by a quartic function like the following expression (1), a parameter k satisfies the condition of Strömegren condition (condition to minimize chromatic aberration) of k = 1.5.

$$z = A(y^4 - kh^2y^2) \qquad\qquad \text{expresion (1)}$$

Where, "z" designates a coordinate in a direction of an optical axis; "A", a constant determined by a correction amount for removing the spherical aberration; "y", a coordinate in a direction vertical to the optical axis; and "h", a radius of the aperture diaphragm.

With respect to the surface shape of the aberration correcting plate 3 like this, since the height from peak to valley of the surface is large, the thickness of the aberration correcting plate becomes large. As a result, in the case where a material having a large absorption coefficient is used for the aberration correcting plate, incident light is greatly attenuated, and the contrast is lowered. Note that the space distribution of transmittance is produced in accordance with the unevenness of the surface shape, and there is a possibility that it affects the picture quality.

Further, that the unevenness of the surface shape of the aberration correcting plate 3 is large gives restriction to the production as well. For example, in the case where the surface shape of the aberration correcting plate 3 is produced by use of cutting or polishing, if the unevenness of the surface shape is large, the amount of working is large and a working time becomes long.

The present invention has been made to solve the foregoing problems, and an object thereof is to obtain an imaging optical system which includes an aberration correcting plate having a surface shape with small unevenness and having high transmittance with respect to a Schmidt type optical system.

Disclosure of the Invention

An imaging optical system according to claim 1 of the present invention includes an optical element having an imaging function as a whole and for imaging incident rays of light from an object, an aperture diaphragm disposed at the center of curvature of the optical element, and an aberration correcting plate disposed near the aperture diaphragm, having at least one surface of an aspherical shape, and for eliminating spherical aberration produced in the optical element, in which when a coordinate in a direction of an optical axis is z, a coordinate in a direction vertical to the optical axis is y, a radius of the aperture diaphragm is h, and a constant determined by a correction amount for eliminating the spherical aberration is A, and when the aspherical shape of the aberration correcting plate is approximated by a quartic function, z = A(y*y*y*y - k*h*h*y*y), a parameter k is almost 1.

An imaging optical system according to claim 2 of the present invention includes an optical element having an imaging function as a whole and for imaging incident rays of light from an object, an aperture diaphragm disposed at the center of curvature of the optical element, and an aberration correcting plate disposed near the aperture diaphragm, having at least one surface of an aspherical shape, and for eliminating spherical aberration produced in the optical element, in which a thickness of a peripheral portion of the aberration correcting plate is almost identical to that of its center portion.

An imaging optical system according to claim 3 of the present invention includes an optical element having an imaging function as a whole and for imaging incident rays of light from an object, an aperture diaphragm disposed at the center of curvature of the optical element, and an aberration correcting plate disposed near the aperture diaphragm, having at least one surface of an aspherical shape, and for eliminating spherical aberration produced in the optical element, in which when a radius of the aberration correcting plate is h, a radius of a neutral band of the aberration correcting plate is almost h/√2.

According to an imaging optical system of claim 4 of the present invention, in the aberration correcting plate, the aspherical shape is such a shape that the aberration slightly remains.

According to an imaging optical system of claim 5 of the present invention, the aberration correcting plate is produced from a material having low transmittance.

According to an imaging optical system of claim 6 of the present invention, the material having the low transmittance is plastic.

According to an imaging optical system of claim 7 of the present invention, the material having the low transmittance is silicon.

According to an imaging optical system of claim 8 of the present invention, in the aberration correcting plate, a neutral band between its center portion and its peripheral portion is very thin or a hole, and a holding member for joining the center portion to the peripheral portion is further provided.

According to an imaging optical system of claim 9 of the present invention, the aberration correcting plate is molded integrally with the holding member.

According to an imaging optical system of claim 10 of the present invention, the holding member is metal.

According to an imaging optical system of claim 11 of the present invention, the aberration correcting plate is bonded to a holding flat plate having high transmittance to a wavelength of light used.

According to an imaging optical system of claim 12 of the present invention, the aberration correcting plate is integrated with the aperture diaphragm.

According to an imaging optical system of claim 13 of the present invention, only one side of the aberration correcting plate is made to have the aspherical shape.

According to an imaging optical system of claim 14 of the present invention, both sides of the aberration correcting plate are made to have the aspherical shape.

Brief Description of the Drawings

FIG. 1 is a view showing a structure of an imaging optical system according to embodiment 1 of the present invention.

FIG. 2 is an enlarged view showing an aberration correcting plate of the imaging optical system according to the embodiment 1 of the present invention.

FIG. 3 is a view showing an aberration correcting plate of an imaging optical system according to embodiment 2 of the present invention.

FIG. 4 is a view showing another aberration correcting plate of the imaging optical system according to the embodiment 2 of the present invention.

FIG. 5 is a view showing a structure of an imaging optical system according to embodiment 3 of the present invention.

FIG. 6 is a view showing a structure of an imaging optical system according to embodiment 4 of the present invention.

FIG. 7 is a view showing an aberration correcting plate of an imaging optical system according to embodiment 5 of the present invention.

FIG. 8 is a view showing a structure of an imaging optical system according to embodiment 7 of the present invention.

FIG. 9 is a view showing a structure of a conventional imaging optical system.

Best Mode for Carrying out the Invention

Hereinafter, embodiments of the present invention each will be described with reference to the drawings.

Embodiment 1

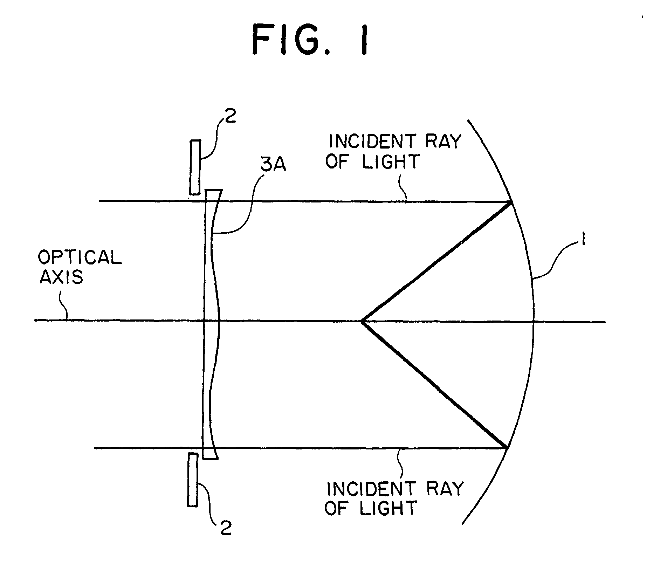

An imaging optical system according to embodiment 1 of the present invention will be described with reference to the drawings. FIG. 1 is a view showing the structure of the imaging optical system according to the embodiment 1 of the present invention. Note that the same characters in the respective drawings designate the same or like portions.

In FIG. 1, reference numeral 1 designates a spherical reflecting mirror which images incident rays of light from an object. Reference numeral 2 designates an aperture diaphragm which is disposed at the center of curvature of the reflecting mirror 1. Reference numeral 3A designates a circular aberration correcting plate which is disposed near the aperture diaphragm 2.

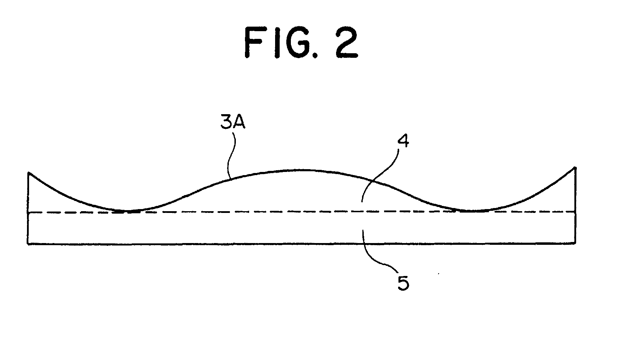

FIG. 2 is an enlarged view of the aberration correcting plate 3A. In order to eliminate spherical aberration produced in the reflecting mirror 2, a side of the aberration correcting plate 3A has an aspherical shape, and the other side is a flat surface. A similar effect can be obtained even if the aspherical shape is arranged at a object side or an image side.

In FIG. 2, reference numeral 4 designates a unevenness portion having an effect of eliminating the spherical aberration and having the aspherical shape. Reference numeral 5 designates a substrate portion which has such a thickness that the aberration correcting plate 3A has satisfactory strength. Hereinafter, when the term of surface shape appears, it indicates the aspherical surface shape.

The above optical system uses such a shape that when the surface shape of the aberration correcting plate 3A is approximated as shown in an expression (2) mentioned below, a parameter k becomes almost 1.

$$z = A(y^4 - kh^2y^2) \qquad \text{expression (2)}$$

Where, "z" designates a coordinate in a direction of an optical axis; "A", a constant determined by a correction amount for eliminating the spherical aberration; "y", a coordinate in a direction vertical to the optical axis; and "h", a radius of the aperture diaphragm.

When the thickness of the unevenness of the surface shape of the aberration correcting plate A3 is d, since the following expression (3) is obtained from the above expression (2), eventually, it becomes thinnest at k = 1, and the thickness $d_{min}$ of the unevenness of the surface shape of the aberration correcting plate 3A at that time is expressed by the following expression (4).

$$d = \max\{Ah^4(k^2/4), Ah^4((k - 2)^2/4)\} \qquad \text{expression (3)}$$

$$d_{min} = Ah^4/4 \qquad \text{expression (4)}$$

When an absorption coefficient of a material is $\alpha$, transmittance T of the unevenness of the aberration correcting plate 3A is expressed by the following expression (5). Here, an integration range is 0 to h.

$$T = (2/h^2) \int y \exp[-\alpha A(y^2 - kh^2/2)^2] dy \qquad \text{expression (5)}$$

From the above expression (5), the transmittance T becomes maximum at k = 1, irrespective of the absorption coefficient $\alpha$. That is, when the surface shape in which k = 1 is obtained is used for the aberration correcting plate 3A, it is possible to form the aberration correcting plate 3A which has the smallest thickness and maximum transmittance T.

Since the transmittance T can be made high by using the aberration correcting plate 3A having the shape as described above, a material having a relatively large absorption coefficient $\alpha$ can be used as a material of the aberration correcting plate 3A.

For example, although plastic or silicon is a material by which a lens can be produced at low cost, the absorption coefficient $\alpha$ is large as an optical material for infrared rays, that is, the transmittance T is low as compared with the transmittance T of germanium of a conventional material, so that it is not generally used. However, when a drop of contrast due to the transmittance is suppressed to the minimum by forming the surface shape of k = 1, plastic or silicon can be used as an inexpensive material of the aberration correcting plate 3A. Note that, since the thickness of the unevenness also becomes minimum, the influence of the spatial distribution of transmittance on the picture quality is also low.

Note that, that the unevenness of the aberration correcting plate 3A is small widens the selection of producing methods. For example, in the case where the surface shape of the aberration correcting plate 3A is produced by use of cutting or polishing, when the unevenness of the surface shape is small, naturally, a working amount is also small, so that a working time is also short and production can be made at low cost.

A working method which can not be applied to a surface shape having large unevenness, can also be applied. For example, it also becomes possible to make such a working that after plastic thermally melted into liquid is coated on a metal substrate, it is solidified and molded. Alternatively, it also becomes possible to process a hard material such as silicon by using etching to make a shape. Alternatively, it also becomes possible to form a shape by using deposition.

Note that the parameter k is expressed by the following expression (7) with respect to the surface shape expressed by an expression (6), using arbitrary coefficients a, b, c1, c2, $\cdots$.

$$z = ay^2 + by^4 + \sum_{i=1} c_i y^{2i+4}$$

$$\text{expression (6)}$$

$$k = \frac{ah^{-2} + \dfrac{35}{4}\sum_{i=1}\left(\dfrac{7}{2i+7} - \dfrac{9}{2i+9}\right)c_i h^{2i}}{b - \dfrac{63}{4}\sum_{i=1}\left(\dfrac{5}{2i+7} - \dfrac{7}{2i+9}\right)c_i h^{2i}}$$

$$\text{expression (7)}$$

Embodiment 2

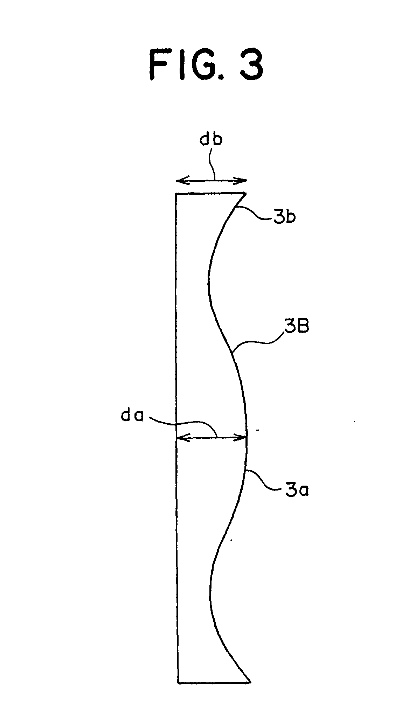

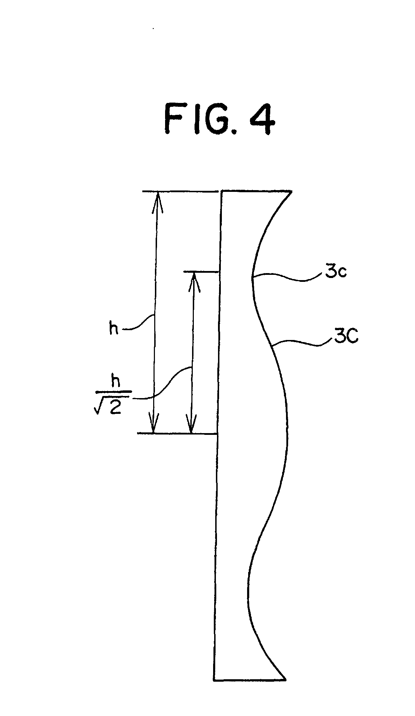

An imaging optical system according to embodiment 2 of the present invention will be described with reference to the drawings. FIG. 3 is a view showing a section of an aberration correcting plate of the imaging optical system according to the embodiment 2 of the present invention. FIG. 4 is a view showing a section of another aberration correcting plate of the imaging optical system according to the embodiment 2 of the present invention.

As shown in FIG. 3, a thickness $d_a$ of the center of a center portion 3a of an aberration correcting plate 3B is made almost identical to a thickness $d_b$ of a peripheral portion 3b, so that an equivalent to the aberration correcting plate 3A of the embodiment 1 can be realized.

Note that, as shown in FIG. 4, a neutral band 3c is placed at a position of a radius $h/\sqrt{2}$ with respect to a radius h of an aberration correcting plate 3C, so that an equivalent to the aberration correcting plate 3A of the embodiment 1 can be realized. Note that the radius of the aberration correcting plate 3C is an effective radius of the aberration correcting plate 3C and is equal to a radius h of the aperture diaphragm 2.

Note that the "neutral band" is points on an aspherical surface of the aberration correcting plate 3C and is points where a contact plane other than the center intersects with the optical axis vertically. An angle of a ray of light passing through the neutral band 3c is not changed before and after the incidence thereof on the aberration correcting plate 3C.

In the aberration correcting plate 3A of the embodiment 1 and the aberration correcting plates 3B and 3C of the embodiment 2, the surface shape is made to have such a shape that the spherical aberration produced by the reflecting mirror 1 is eliminated. However, when such a shape is made that the spherical aberration slightly remains, that is, for example, in the aberration correcting plate 3A, for example, the constant A in the expression (2) is made small to lessen the unevenness of the aspherical shape, and when the surface shape of the aberration correcting plate is made to have such a shape that the spherical aberration slightly remains, the focal depth can be lengthened. By lengthening the focal depth, the influence of curvature of field becomes low, and a wide angle optical system can be used even for a flat image detector.

Embodiment 3

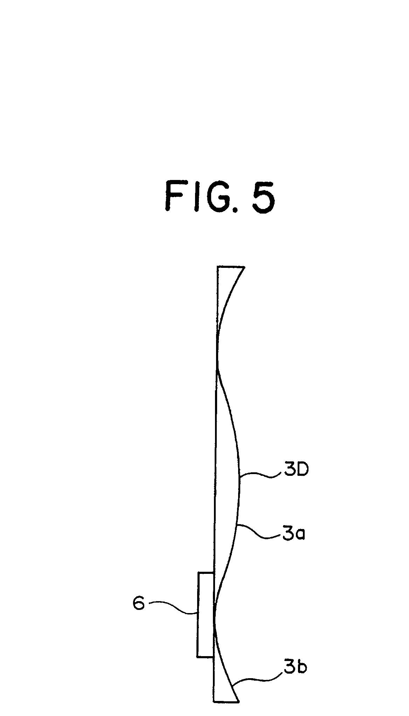

An imaging optical system according to embodiment 3 will be described with reference to the drawing. FIG. 5 is a view showing an aberration correcting plate of the imaging optical system according to the embodiment 3 of the present invention.

In FIG. 5, reference numeral 6 designates a holding member of, for example, a plate shape, which fixes a center portion 3a of an aberration correcting plate 3D to a peripheral portion 3b. Other structural parts are the same as those of the embodiment 1. Note that the holding member 6 may have any shape.

Although the thickness of the aberration correcting plate 3A in the embodiment 1 is determined by the sum of the unevenness portion 4 and the substrate portion 5, in the case where a material having low transmittance is used for the aberration correcting plate 3D, as it becomes thin, its transmittance naturally becomes high, which is preferable. Since the thickness of the unevenness portion 4 is determined by the aspherical shape, it can not be freely set.

On the other hand, since the thickness of the substrate portion 5 is determined by the strength, when the center portion 3a is supported by, for example, the holding member 6 as shown in FIG. 5, the substrate portion 5 can be made considerably thin or can be completely removed.

Further, if the produced aberration is within an allowable range, a structure can also be adopted in which a hole is bored in the neutral band of the aberration correcting plate 3D.

In the example shown in FIG. 5, although the holding member 6 is provided at only one place, in the case where the strength is required, it may be fixed, for example, radially at several places . Alternatively, a mesh shape holding member may be used.

Note that, in order to decrease the number of parts and operation steps, the aberration correcting plate 3D and the holding member 6 may be integrally molded.

Alternatively, in order to suppress the diffraction produced by the holding member 6 or a drop in transmittance, the holding member 6 may be made thin by using a material having strength, for example, metal.

Embodiment 4

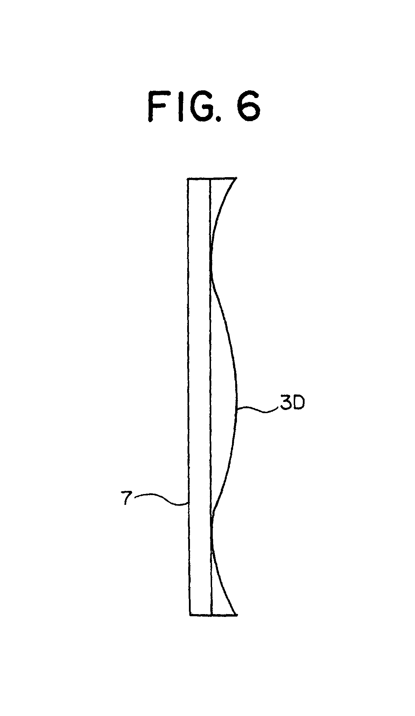

An imaging optical system according to embodiment 4 will be described with reference to the drawing. FIG. 6 is a view showing a structure of the imaging optical system according to the embodiment 4 of the present invention.

In FIG. 6, reference numeral 7 designates a circular holding flat plate to which an aberration correcting plate 3D is bonded and is fixed, and its transmittance is high to a wavelength of light used for a camera. Other structural parts are the same as those of the embodiment 1.

In the embodiment 3, although the holding member 6 is used for obtaining satisfactory strength to the aberration correcting plate 3D, in this embodiment 4, the strength is obtained by bonding the aberration correcting plate 3D to the holding flat plate 7 transparent to the wavelength of light used.

Embodiment 5

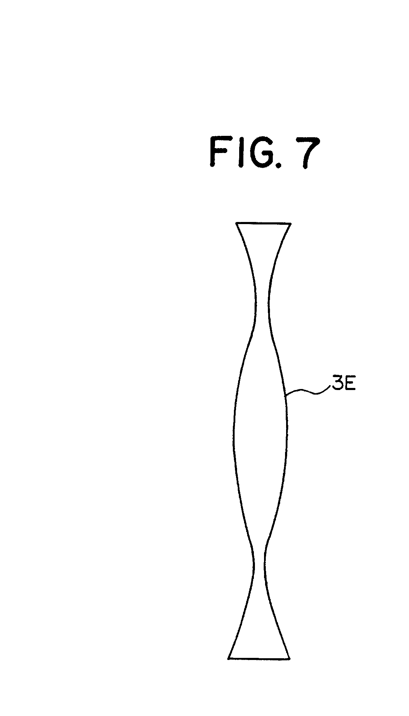

An imaging optical system according to embodiment 5 will be described with reference to the drawing. FIG. 7 is a view showing an aberration correcting plate of the imaging optical system according to the embodiment 5 of the present invention.

In the respective embodiments mentioned above, although only one side of each of the aberration correcting plates 3A to 3D is made to have the aspherical shape, as shown in FIG. 7, even if both sides are made to have the aspherical shape, a similar effect can be obtained. In this case, a neutral band of an aberration correcting plate 3E indicates a place where the plate thickness is thinnest. The parameter k can be obtained by approximating the thickness of the aberration correcting plate by a quartic function expressed by the following expression (8).

$$z = A(y^2 - kh^2/2)^2 \hspace{4cm} \text{expression (8)}$$

Embodiment 6

In the respective embodiments mentioned above, although the reflecting mirror 1 is used for imaging incident rays of light from an object, any optical element may be used as long as it has a similar imaging function (light-concentrating function).

For example, a refraction optical system, a diffraction lens, or a Fresnel lens can also be used.

Further, the number of elements is not limited to one, but any number of elements may be used as long as the imaging function (light-concentrating function) is obtained as a whole.

Embodiment 7

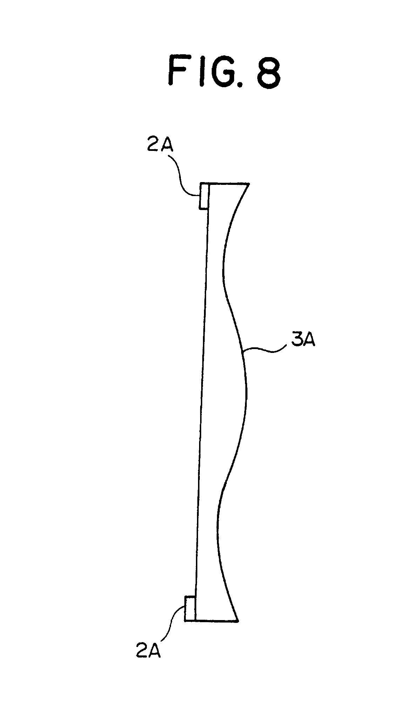

An imaging optical system according to embodiment 7 of the present invention will be described with reference to the drawing. FIG. 8 is a view showing an aberration correcting plate of the imaging optical system according to the embodiment 7 of the present invention.

In the respective embodiments mentioned above, although the aperture diaphragm 2 and each of the aberration correcting plates 3A to 3E are structured as separate parts, the aperture diaphragm 2 and each of the aberration correcting plates 3A to 3E may be integrated by providing a light shielding portion 2A at a peripheral portion of each of the aberration correcting plates 3A to 3E.

Such a structure can be realized by, for example, applying opaque black paint to the peripheral portion of each of the aberration correcting plates 3A to 3E.

According to such a structure, since the aperture diaphragm 2 as a separate part can be omitted, the number of parts can be reduced, and the production steps of the parts and assembling steps can be decreased.

Industrial Applicability

An imaging optical system according to claim 1 of the present invention includes, as described above, an optical element having an imaging function as a whole and for imaging incident rays of light from an object, an aperture diaphragm disposed at the center of curvature of the optical element, and an aberration correcting plate disposed near the aperture diaphragm, having at least one surface of an aspherical shape, and for eliminating spherical aberration produced in the optical element, in which when a coordinate in a direction of an optical axis is z, a coordinate in a direction vertical to the optical axis is y, a radius of the aperture diaphragm is h, and a constant determined by a correction amount for eliminating the spherical aberration is A, and when the aspherical shape of the aberration correcting plate is approximated by a quartic function, $z = A(y*y*y*y - k*h*h*y*y)$, a parameter k is almost 1, whereby there are obtained such effects that the unevenness of the aspherical shape can be made small with respect to the Schmidt type optical system, and the transmittance can be made high.

An imaging optical system according to claim 2 of the present invention includes, as described above, an optical element having an imaging function as a whole and for imaging incident rays of light from an object, an aperture diaphragm disposed at the center of curvature of the optical element, and an aberration correcting plate disposed near the aperture diaphragm, having at least one surface of an aspherical shape, and for eliminating spherical aberration produced in the optical element, in which a thickness of a peripheral portion of the aberration correcting plate is almost identical to that of its center portion, whereby there are obtained such effects that the unevenness of the aspherical shape can be made small with respect to the Schmidt type optical system, and the transmittance can be made high.

An imaging optical system according to claim 3 of the present invention includes, as described above, an optical element having an imaging function as a whole and for imaging incident rays of light from an object, an aperture diaphragm disposed at the center of curvature of the optical element, and an aberration correcting plate disposed near the aperture diaphragm, having at least one surface of an aspherical shape, and for eliminating spherical aberration produced in the optical element, in which when a radius of the aberration correcting plate is h, a radius of a neutral band of the aberration correcting plate is almost $h/\sqrt{2}$, whereby there are obtained such effects that the unevenness of the aspherical shape can be made small with respect to the Schmidt type optical system, and the transmittance can be made high.

According to an imaging optical system of claim 4 of the present invention, as described, in the aberration correcting plate, the aspherical shape is such a shape that the aberration slightly remains, whereby there is obtained an effect that the influence of curvature of field can be made low.

According to an imaging optical system of claim 5 of the present invention, as described above, the aberration correcting plate is formed from a material having low transmittance, whereby there is obtained such an effect that the unevenness of the aspherical shape can be made small with respect to the Schmidt type optical system.

According to an imaging optical system of claim 6 of the present invention, as described above, the material having the low transmittance is plastic, whereby there is obtained such an effect that the unevenness of the aspherical shape can be made small with respect to the Schmidt type optical system.

According to an imaging optical system of claim 7 of the present invention, as described above, the material having the low transmittance is silicon, whereby there is obtained such an effect that the unevenness of the aspherical shape can be made small with respect to the Schmidt type optical system.

According to an imaging optical system of claim 8 of the present invention, as described above, in the aberration correcting plate, a neutral band between its center portion and its peripheral portion is considerably thin or a hole, and a holding member for joining the center portion to the peripheral portion is further provided, whereby there is obtained such an effect that the unevenness of the aspherical shape can be made small with respect to the Schmidt type optical system.

According to an imaging optical system of claim 9 of the present invention, as described above, the aberration correcting plate is molded integrally with the holding member, whereby there is obtained such an effect that the number of parts can be reduced.

According to an imaging optical system of claim 10 of the present invention, as described above, the holding member is metal, whereby there is obtained such an effect that the unevenness of the aspherical shape can be made small with respect to the Schmidt type optical system.

According to an imaging optical system of claim 11 of the present invention, as described above, the aberration correcting plate is bonded to a holding flat plate having high transmittance to a wavelength of light used, whereby there is obtained such an effect that the unevenness of the aspherical shape can be made small with respect to the Schmidt type optical system.

According to an imaging optical system of claim 12 of the present invention, as described above, the aberration correcting plate is integrated with the aperture diaphragm, whereby there is obtained such an effect that the number of parts can be reduced.

According to an imaging optical system of claim 13 of the present invention, as described above, only one side of the aberration correcting plate is made to have the aspherical shape, whereby there are obtained such effects that the unevenness of the aspherical shape can be made small with respect to the Schmidt type optical system, and the transmittance can be made high.

According to an imaging optical system of claim 14 of the present invention, as described above, both sides of the aberration correcting plate are made to have the aspherical shape, whereby there are obtained such effects that the unevenness of the aspherical shape can be made small with respect to the Schmidt type optical system, and the transmittance can be made high.

**Claims**

1. An imaging optical system comprising:

   an optical element having an imaging function as a whole and for imaging incident rays of light from an object;
   an aperture diaphragm disposed at the center of curvature of the optical element; and
   an aberration correcting plate disposed near the aperture diaphragm, having at least one surface of an aspherical shape, and for eliminating spherical aberration produced in the optical element, wherein

   when a coordinate in a direction of an optical axis is z, a coordinate in a direction vertical to the optical axis is y, a radius of the aperture diaphragm is h, and a constant determined by a correction amount for eliminating the spherical aberration is A, and when the aspherical shape of the aberration correcting plate is approximated by a quartic function, $z = A(y*y*y*y - k*h*h*y*y)$, a parameter k is almost 1.

2. An imaging optical system comprising:

   an optical element having an imaging function as a whole and for imaging incident rays of light from an object;
   an aperture diaphragm disposed at the center of curvature of the optical element; and

an aberration correcting plate disposed near the aperture diaphragm, having at least one surface of an aspherical shape, and for eliminating spherical aberration produced in the optical element, wherein a thickness of a peripheral portion of the aberration correcting plate is almost identical to that of its center portion.

3. An imaging optical system comprising:

an optical element having an imaging function as a whole and for imaging incident rays of light from an object; an aperture diaphragm disposed at the center of curvature of the optical element; and an aberration correcting plate disposed near the aperture diaphragm, having at least one surface of an aspherical shape, and for eliminating spherical aberration produced in the optical element, wherein

when a radius of the aberration correcting plate is h, a radius of a neutral band of the aberration correcting plate is almost h/ $\sqrt{2}$.

4. An imaging optical system according to any one of claims 1 to 3, wherein in the aberration correcting plate, the aspherical shape is such a shape that the aberration slightly remains.

5. An imaging optical system according to any one of claims 1 to 3, wherein the aberration correcting plate is made of a material having low transmittance.

6. An imaging optical system according to claim 5, wherein the material having the low transmittance is plastic.

7. An imaging optical system according to claim 5, wherein the material having the low transmittance is silicon.

8. An imaging optical system according to claim 5, wherein in the aberration correcting plate, a neutral band between its center portion and its peripheral portion is very thin or a hole, and a holding member for joining the center portion to the peripheral portion is further provided.

9. An imaging optical system according to claim 8, wherein the aberration correcting plate is molded integrally with the holding member.

10. An imaging optical system according to claim 8, wherein the holding member is metal.

11. An imaging optical system according to claim 5, wherein the aberration correcting plate is bonded to a holding flat plate having high transmittance to a wavelength of light used.

12. An imaging optical system according to any one of claims 1 to 3, wherein the aberration correcting plate is integrated with the aperture diaphragm.

13. An imaging optical system according to any one of claims 1 to 3, wherein only one side of the aberration correcting plate has the aspherical shape.

14. An imaging optical system according to any one of claims 1 to 3, wherein both sides of the aberration correcting plate have the aspherical shape.

# FIG. 1

# FIG. 2

# FIG. 3

# FIG. 4

3c

3C

$h$

$\dfrac{h}{\sqrt{2}}$

# FIG. 5

# FIG. 6

3D

7

# FIG. 7

3E

# FIG. 8

# FIG. 9

## INTERNATIONAL SEARCH REPORT

| | International application No. |
|---|---|
| | PCT/JP00/02588 |

**A. CLASSIFICATION OF SUBJECT MATTER**
Int.Cl$^7$   G02B17/08

According to International Patent Classification (IPC) or to both national classification and IPC

**B. FIELDS SEARCHED**

Minimum documentation searched (classification system followed by classification symbols)
Int.Cl$^7$   G02B17/08, G02B23/02-23/22

Documentation searched other than minimum documentation to the extent that such documents are included in the fields searched
Jitsuyo Shinan Koho          1926-1996     Toroku Jitsuyo Shinan Koho  1994-2000
Kokai Jitsuyo Shinan Koho   1971-2000     Jitsuyo Shinan Toroku Koho  1996-2000

Electronic data base consulted during the international search (name of data base and, where practicable, search terms used)
JICST FILE(JOIS) schmidt camera (in Japanese)
WPI(DIALOG) schmidt(W)camera + schmidt(W)lens

**C. DOCUMENTS CONSIDERED TO BE RELEVANT**

| Category* | Citation of document, with indication, where appropriate, of the relevant passages | Relevant to claim No. |
|---|---|---|
| A | US 5734496 A (Her Majesty The Queen In Right of New Zealand), 18 March, 1998 (18.03.98), Figs. 2,14 & JP, 6-82699, A, Fig. 2 & NZ, 236307, A     & US, 5995280, A | 1-14 |
| A | JP 59-97112 A (Olympus Optical Company Limited), 04 June, 1984 (04.06.84), Figs. 1 to 3   (Family: none) | 1-14 |
| X | Hideo HOIROSE, "Schmidt Camera", (Butsurigaku Shuusho 8)1$^{st}$ printing, Kawade Shobou, 05 November, 1947 pages 29~31, 44~45 | 1-4,12,13 |
| Y | pages 29~31, 44~45 | 5-7,14 |
| A | pages 29~31, 44~45 | 8-11 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 May, 2000 (17.05.00) | 30 May, 2000 (30.05.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP00/02588 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

    Claims 1, 4-14 describe an image optical system, wherein parameter k is approximately one when the aspherical shape of the aberration correcting plate is approximated by a quartic function z=A(y*y*y*y-k*h*h*y*y).
    Claim 2 describes an image optical system, wherein the thicknesses at the center portion and the peripheral edge portion of the aberration correcting plate are approximately equal to each other.
    Claim 3 describes an image optical system, wherein the radius at the neutral zone of the aberration correcting plate is approximately h/√2 when the radius of the aberration correcting plate is h.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.
                         ☐    No protest accompanied the payment of additional search fees.

Form PCT/ISA/210 (continuation of first sheet (1)) (July 1992)